# EUROPEAN PATENT SPECIFICATION

(11) **EP 2 738 080 B1**
(45) Date of publication and mention of the grant of the patent: **14.09.2016**
(21) Application number: 12818010.6
(22) Date of filing: 19.07.2012
(51) Int. Cl.: B62M 6/90, B62K 19/40

(54) **ELECTRICAL COMPONENT LAYOUT STRUCTURE FOR ELECTRIC AUTOMOBILE**
ANORDNUNGSSTRUKTUR FÜR ELEKTRISCHES BAUELEMENT EINES ELEKTROFAHRZEUGES
STRUCTURE D'ORGANISATION DES COMPOSANTS ÉLECTRIQUES POUR UNE AUTOMOBILE ÉLECTRIQUE

(30) Priority: 28.07.2011 CN 201110213506
(43) Date of publication of application: 04.06.2014
(73) Proprietor: Honda Motor Co., Ltd., Minato-ku Tokyo 107-8556 (JP)
(72) Inventor: LI, Shi Wei, Shanghai 201611 (CN); MA,Rui, Shanghai 201611 (CN); HUANG, Fu Ying, Shanghai 201611 (CN); JIANG, Yun, Shanghai 201611 (CN)
(74) Representative: Beder, Jens
(86) International application number: PCT/JP2012/068355
(87) International publication number: WO 2013/015196

(56) References cited:
- DE-U1- 29 905 171
- JP-A- 9 095 291
- JP-A- 10 230 881
- JP-A- 2000 033 893
- JP-A- 2000 033 893
- JP-A- 2002 145 148
- JP-A- 2002 326 595

## Description

### Technical Field

The present invention relates to an electrically powered bicycle (electric automobile) on which an electric component layout structure for electric components is mounted.

### Background Art

Japanese Laid-Open Patent Publication No. 10-230881 discloses an electrically powered bicycle having a battery, which is disposed between an upstanding pipe and a rear wheel, and a key unit, which is disposed in front of the upstanding pipe and has a lock mechanism for releasably locking the battery.

According to the conventional art, the battery includes a cell unit, a terminal unit disposed beneath the cell unit, and a battery case housing the cell unit and the terminal unit therein. Therefore, since the battery requires a space for placement of the terminal unit, the center of gravity of the battery is elevated in position. Further, the battery has a small capacity because the vertical height of the battery is limited in order to prevent the battery from interfering with the saddle of the bicycle.

An electrically powered bicycle comprising electric component layout structure, in which all features of the preamble of claim 1 are disclosed, is described in DE 299 05 171 U1.

### Summary of Invention

It is an object of the present invention to provide an electrically powered bicycle comprising an electric component layout structure, which effectively lowers the center of gravity of a battery as much as possible, and increases the capacity of the battery.

This object is achieved by an electrically powered bicycle according to the enclosed independent claim 1. Advantageous features of the present invention are defined in the corresponding subclaims.

In accordance with the invention recited in claim 1, there is provided an electrically powered bicycle comprising an electric component layout structure, including a battery for supplying electric power to a traction motor to propel the electrically powered bicycle, a vehicle body frame housing the battery between a seat pipe and a rear wheel and having a pair of left and right subframes including respective front ends connected to an upper portion of the seat pipe, and respective rear ends connected to rear wheel supports that rotatably support a rear wheel, and a pair of left and right second subframes including respective front ends connected to a lower portion of the
seat pipe, and respective rear ends connected to the rear wheel supports, a battery holder fixing the battery to a vehicle body frame, and a drive control device for supplying electric power to the traction motor in response to a request from a rider of the electrically powered bicycle. The electric component layout structure further comprises a drive control device housing, including a housing disposed between the left and right second subframes and projecting downward from the left and right second subframes, the housing accommodating the drive control device therein, and a lid covering an upper end of the housing and holding the battery holder, which is secured thereto, above the housing.

According to the invention recited in claim 2, in the electric component layout structure for the electrically powered bicycle of claim 1, a drive control device housing further includes a pair of front and rear third subframes, which extend between the left and right second subframes at front and rear positions on the left and right second subframes, and securing the lid at front and rear ends thereof.

According to the invention recited in claim 3, in the electric component layout structure for the electrically powered bicycle of claim 1, the battery includes a plurality of battery modules housed in a case, a battery being inclined rearwardly along the seat pipe, the battery modules being interconnected by an electric power line, which is positioned in a front portion of a case of the battery.

According to the invention recited in claim 4, in the electric component layout structure for the electrically powered bicycle of claim 1, the battery has on a rear surface thereof a guide for fitting engagement with a guide rail of a battery holder, the guide having a lower end shaped with a tapered portion that spreads progressively outward.

According to the invention recited in claim 5, in the electric component layout structure for the electrically powered bicycle of claim 1, the lid includes connection terminals of an electric power line, the connection terminals being connectable to connectors of a battery.

According to the invention recited in claim 1, since the drive control device is disposed beneath the second subframes, the center of gravity of the battery is lowered, thereby increasing the stability of the electrically powered bicycle during riding. Further, since the position of the battery is lowered, the battery can easily be removed, and the capacity of the battery can be increased.

According to the invention recited in claim 2, the drive control device housing in which the drive control device is accommodated further includes the third subframes, which extend between the left and right second subframes at front and rear positions on the left and right second subframes, thereby securing the lid at front and rear ends thereof. Thus, the lid can be secured firmly to the vehicle body frame. Since the lid is supported by both of the second subframes and the third subframes, the lid is made sufficiently rigid so as to adequately support the battery, which is heavy.

According to the invention recited in claim 3, the battery includes battery modules that are housed in the case, the battery is inclined rearwardly along the seat pipe, and the battery modules are interconnected by the electric power line positioned in a front portion of the battery case. Thus, the electric power line is prevented from becoming damaged due to gravity that acts on the battery modules. If the electric power line were placed in a rear portion of the battery case, then the case would be required to have a space or structure to provide room for protecting the electric power line from damage due to gravity. However, since the electric power line is disposed in a front portion of the case, the amount of room provided by the case can be smaller than if the electric power line were placed in a rear portion of the case, thus easily allowing the battery to have a desired capacity.

According to the invention recited in claim 4, the battery includes, on the rear surface thereof, the guide, which is fitted in engagement with the guide rail of the battery holder. The guide further includes a lower end, which is shaped with a tapered portion that spreads progressively outward, whereby the battery is slidably fixed to the guide rail of the battery holder and can easily be installed on the battery holder. During installation of the battery, the tapered guide allows the battery to be installed easily within a compact space, since there is no need for a large space, as is required in the case of the conventional art. Thus, installation and removal of the battery, which is heavy, can be performed easily.

According to the invention recited in claim 5, costs are reduced, because a separate terminal base is not required in order to connect the battery and the electric power line to each other. Further, since the lid is rigid, the lid including the connection terminals directly mounted thereon functions as a terminal base for supporting the connection terminals during installation and removal of the battery. Consequently, there is no need to provide a separate terminal base.

The above objects, features, and advantages of the present invention will become more apparent from the following description when taken in conjunction with the accompanying drawings in which preferred embodiments of the present invention are shown by way of illustrative example.

### Brief Description of Drawings

FIG. 1 is a left-hand side elevational view of an electrically powered bicycle;
FIG. 2 is a detailed view showing a right-hand grip provided on a handle;
FIG. 3 is a detailed view showing a left-hand grip provided on the handle;
FIG. 4 is a schematic view showing an internal structure of a battery, which is mounted on a vehicle body frame;
FIG. 5 is a detailed view showing a seat assembly;
FIG. 6 is an enlarged view of an area C shown in FIG. 1;
FIG. 7 is a view of the area C, which is shown at an enlarged scale in FIG. 6, with a protective cover and a stand removed;
FIG. 8 is a cross-sectional view taken along line VIII-VIII of FIG. 6;
FIG. 9 is an exploded perspective view showing a battery holder and a drive control device housing;
FIG. 10 is an enlarged left-hand side elevational view of the battery holder and the drive control device housing shown in FIG. 1;
FIG. 11 is a perspective view of the battery shown in FIG. 1;
FIG. 12 is a view illustrating the manner in which the battery is installed on the battery holder;
FIG. 13 is a view showing a rib of the battery holder;
FIG. 14 shows in perspective a front view and a left-hand side view of a housing cover shown in FIG. 1;
FIG. 15 shows in perspective an upper view and a left-hand side view of the drive control device housing combined with the housing cover shown in FIG. 1;
FIG. 16 is a view illustrating the manner in which a lock pin of a battery lock device is operated by a key to result in a first state;
FIG. 17 is a view illustrating the manner in which the lock pin of the battery lock device is operated by the key to result in a second state; and
FIG. 18 is a view illustrating the manner in which the lock pin of the battery lock device is operated by the key to result in a third state.

### Description of Embodiments

An electric component layout structure for an electrically powered bicycle according to a preferred embodiment of the present invention will be described in detail below with reference to the accompanying drawings.

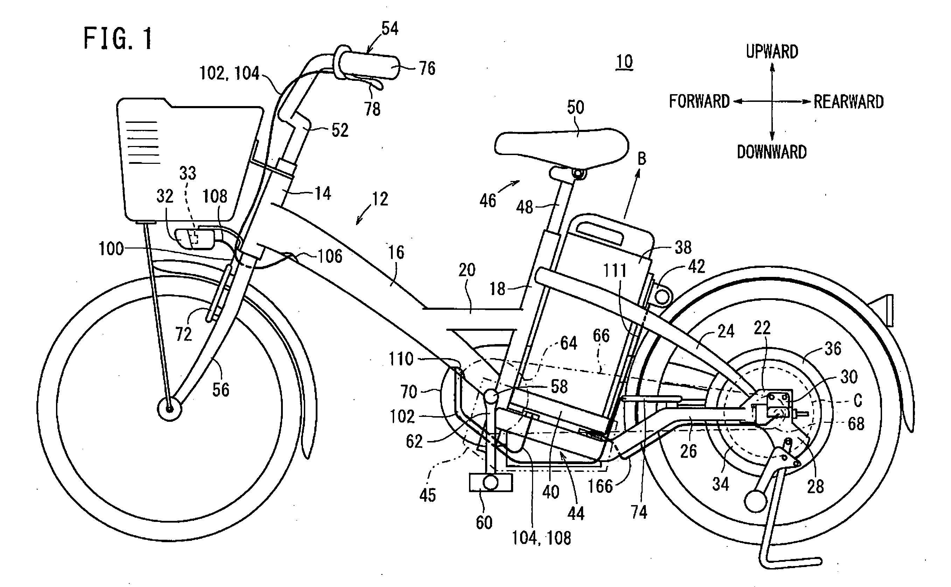

FIG. 1 is a left-hand side elevational view of an electrically powered bicycle 10. For facilitating understanding of the present invention, unless indicated otherwise, forward, rearward, upward, and downward directions will be described based on the directions indicated by the arrows in FIG. 1, whereas leftward and rightward directions will be described based on directions as viewed from the perspective of a rider who is seated on the vehicle body.

The electrically powered bicycle 10 has a vehicle body frame 12 including a head pipe 14 positioned in a front portion of the vehicle body, a main frame 16 extending rearward and downwardly from the head pipe 14, a seat pipe 18 connected to a rear end of the main frame 16 and rising upwardly, a reinforcement pipe 20 extending rearwardly from the main frame 16 and joined to the seat pipe 18, a pair of left and right first subframes 24 with respective front ends connected to an upper portion of the seat pipe 18 and respective rear ends connected to rear wheel supports 22 that rotatably support a rear wheel (drive wheel) WR, and a pair of left and right second subframes 26 having respective front ends connected to a lower portion of the seat pipe 18, and respective rear ends connected to the rear wheel supports 22. Stands 28, which keep the electrically powered bicycle 10 self-standing, and a pair of protective covers 30, which protect left and right ends of the axle of the rear wheel WR, are attached to the rear wheel supports 22. An accessory light 32 for illuminating an area in front of the electrically powered bicycle 10 is mounted on the head pipe 14. The accessory light 32 incorporates therein an accessory buzzer 33 for generating a warning sound to pedestrians.

A traction motor 34 comprises an in-wheel motor, which is disposed on a hub 36 of the rear wheel WR. A 36-V, 12-Ah battery 38, which serves as a power supply for the traction motor 34, is housed between the seat pipe 18 and the rear wheel WR, adjacent to the left and right first subframes 24 and the left and right second subframes 26. More specifically, the battery 38 is fixed to the vehicle body frame 12 by a battery holder 40, which is disposed between the seat pipe 18 and the rear wheel WR, between the left and right first subframes 24, and between the left and right second subframes 26. The left and right first subframes 24 and the left and right second subframes 26 serve to protect the battery 38.

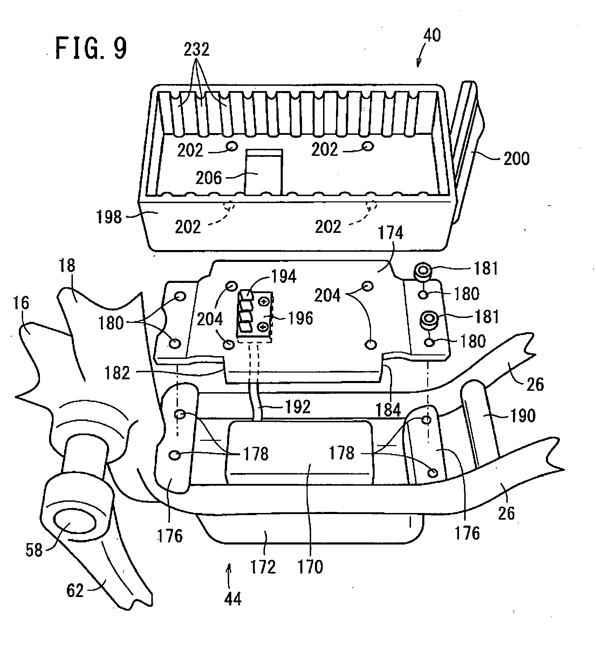

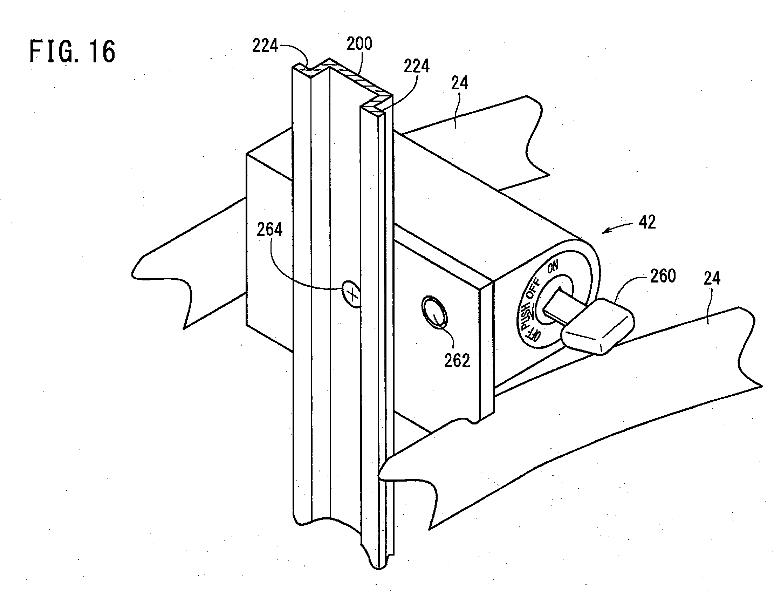

A battery lock device 42 is mounted on the left and right first subframes 24, for thereby securing the battery holder 40 and locking the battery 38 to prevent removal of the battery 38 from the vehicle body frame 12. The battery lock device 42 also functions as a combination switch for turning on and off the power supply of the traction motor 34 responsive to operations of a key 260 (see FIGS. 16 through 18). The left and right second subframes 26 support a drive control device housing 44, which accommodates a drive control device 170 (see FIG. 9) therein that functions as an electric component for supplying electric power in order to control the traction motor 34 in response to a request from the rider. The battery holder 40 is mounted on the upper surface of the drive control device housing 44. The drive control device 170 includes a PDU for energizing the traction motor 34, a computer having a CPU for controlling the PDU, a memory, etc., and a recording medium (not shown). The PDU converts electric power from the battery into three-phase AC electric power, and supplies the three-phase AC electric power to the traction motor 34, thereby energizing the traction motor 34. The computer performs a predetermined control process according to a program stored in the recording medium. The drive control device 170 is protected by a housing cover 45.

A seat assembly 46 includes a seat post 48, which is mounted on the seat pipe 18 for adjusting a vertical position of a seat 50. A handle 54 is mounted on an upper portion of a steering shaft 52, which has an intermediate portion that is held rotatably by the head pipe 14. A front wheel (steerable wheel) WF is mounted on a front portion of the vehicle body, and is rotatably supported by a pair of' left and right front fork members 56, which extend from a lower end of the steering shaft 52.

A horizontally extending crankshaft 58 is rotatably supported on an intermediate portion of the vehicle body frame 12. Cranks 62, which have respective pedals 60, are connected respectively to opposite ends of the crankshaft. 58. A front sprocket 64 is connected to a right end side of the crankshaft 58. When the rider operates the pedals 60, the crankshaft 58 is powered to rotate the front sprocket 64. Rotation of the front sprocket 64 is transmitted through a chain 66 to the rear wheel WR, via a rear sprocket 68 that is mounted on the rear wheel WR, thereby rotating the rear wheel WR. The front sprocket 64 and the chain 66 are protected by a cover 70.

A front wheel cantilever brake 72 for stopping the front wheel WF from rotating is mounted on the left and right front fork members 56. A rear wheel cantilever brake 74 for stopping the rear wheel WR from rotating is mounted on the left and right second subframes 26. The front wheel cantilever brake 72 and the rear wheel cantilever brake 74 serve as brake devices for braking the electrically powered bicycle 10.

A pair of left and right grips 76 and a pair of left and right brake levers (brake indicating means) 78 are mounted on the handle 54. When the right brake lever 78 is operated, the front wheel cantilever brake 72 is actuated, and when the left brake lever 78 is operated, the rear wheel cantilever brake 74 is actuated.

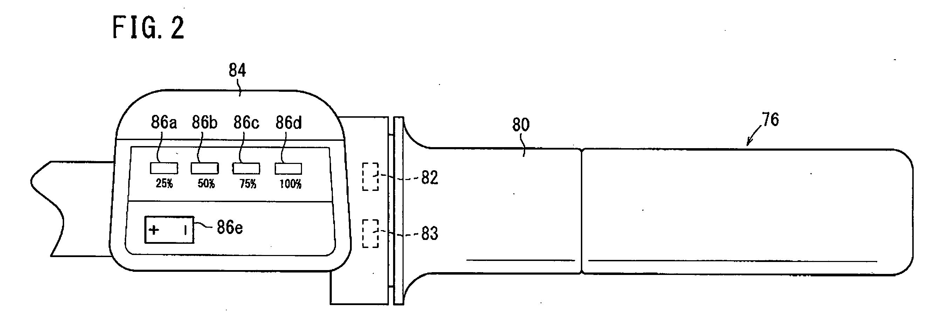

FIG. 2 is a detailed view showing the right-hand grip (hereinafter referred to as a "right grip") 76 provided on the handle 54. In FIG. 2, the brake lever 78 is omitted from illustration. The right grip 76 includes a rotatable accelerator grip 80 for requesting drive power from the traction motor 34, an accelerator opening sensor (rotational angle detecting means) 82 for detecting a rotational angle (opening) of the accelerator grip 80, and a brake sensor (brake operation detecting means) 83 for detecting whether or not the right-hand brake lever 78 has been operated. The drive control device 170 controls the traction motor 34 depending on the rotational angle of the accelerator grip 80, which is detected by the accelerator opening sensor 82. More specifically, as the rotational angle of the accelerator grip 80 increases, the drive control device 170 supplies electric power to the traction motor 34 in order to increase the traveling speed of the electrically powered bicycle 10, thereby controlling the traction motor 34.

An indicator 84 for indicating a remaining capacity of the battery 38 is disposed on the left-hand side of the right grip 76. The indicator 84 includes plural light-emitting spots 86a, 86b, 86c, 86d, 86e, which indicate the remaining capacity of the battery 38. The light-emitting spots 86a, 86b, 86c, 86d, 86e comprise light-emitting elements such as LEDs or the like, not shown, for emitting light. The drive control device 170 controls emission of light from the light-emitting elements, so as to enable the indicator 84 to display the remaining capacity of the battery 38. For example, if the remaining capacity of the battery 38 is greater than 87.5% and equal to or less than 100%, the drive control device 170 turns on the light-emitting spots 86a, 86b, 86c, 86d. If the remaining capacity of the battery 38 is greater than 62.5% and equal to or less than 87.5%, the drive control device 170 turns on the light-emitting spots 86a, 86b, 86c. If the remaining capacity of the battery 38 is greater than 37.5% and equal to or less than 62.5%, the drive control device 170 turns on the light-emitting spots 86a, 86b. If the remaining capacity of the battery 38 is greater than 12.5% and equal to or less than 37.5%, the drive control device 170 turns on the light-emitting spot 86a. If the remaining capacity of the battery 38 is equal to or less than 12.5%, the drive control device 170 turns on the light-emitting spot 86e.

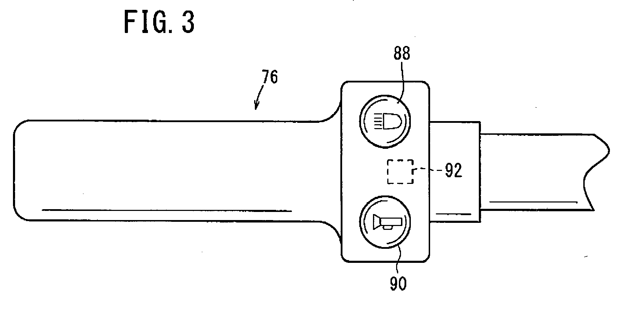

FIG. 3 is a detailed view showing the left-hand grip (hereinafter referred to as a "left grip") 76 provided on the handle 54. In FIG. 2, the brake lever 78 is omitted from illustration. The left grip 76 includes a lighting switch 88 for instructing the drive control device 170 to turn on the accessory light 32, a warning sound switch 90 for instructing the drive control device 170 to control the accessory buzzer 33 to generate a warning sound, and a brake sensor (brake operation detecting means) 92 for detecting whether or not the left-hand brake lever 78 has been operated. When the lighting switch 88 is operated, the drive control device 170 turns on the accessory light 32. When the warning sound switch 90 is operated, the drive control device 170 controls the accessory buzzer 33 to generate a warning sound.

As shown in FIG. 1, a wire 100, which is connected to the right-hand brake lever 78, extends along the head pipe 14 and is connected to the front wheel cantilever brake 72. A wire 102, which is connected to the left-hand brake lever 78, and a cable 104, which includes a plurality of wires connected respectively to the accelerator opening sensor 82, the indicator 84, the brake sensors 83, 92, the lighting switch 88, and the warning sound switch 90, extends along the head pipe 14, through a grommet 106 provided on a lower surface of a front end portion of the main frame 16, and into the main frame 16. A cable 108, which includes wires connected respectively to the accessory light 32 and the accessory buzzer 33, also extends through the grommet 106 and into the main frame 16. The wire 102 and the cables 104, 108, which extend through the main frame 16, are led through a grommet 110 provided on a lower surface of a rear end portion of the main frame 16, and into the housing cover 45. The cables 104, 108, which extend into the housing cover 45, are led into the drive control device housing 44, where the cables 104, 108 are connected respectively to the drive control device 170. The wire 102, which extends into the housing cover 45, extends further along a lower left-hand side surface of the drive control device 170, and is connected to the rear wheel cantilever brake 74. Since they extend through the main frame 16, the wire 102 and the cables 104, 108 are protected. An electric wire 111, which is connected to the battery lock device 42, extends downward and is led into the drive control device housing 44, where the electric wire 111 is connected to the drive control device 170.

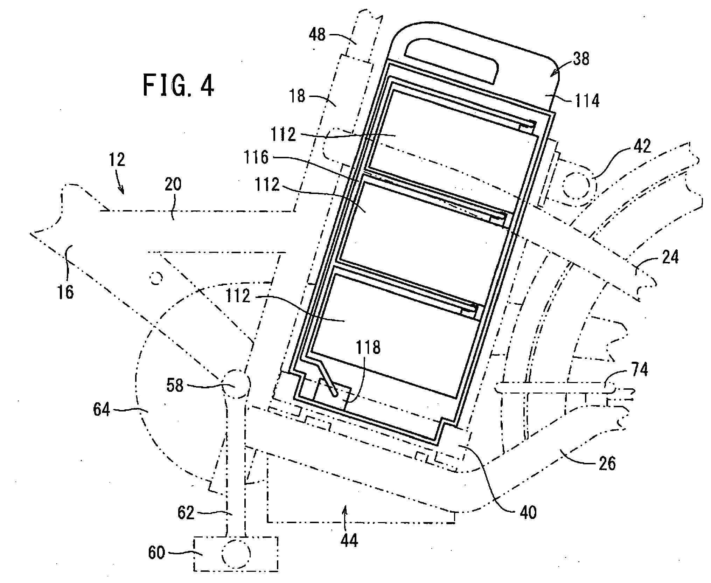

FIG. 4 is a schematic view showing an internal structure of the battery 38, which is mounted on the vehicle body frame 12. As shown in FIG. 4, the battery 38 has three battery modules 112 housed in a case 114. The battery modules 112, each of which comprises a 12-V, 12-Ah battery module, are connected in series. The battery modules 112 are interconnected by an electric power line 116, which is positioned in front of the battery modules 112 of the battery 38 that is mounted on the vehicle body frame 12. The battery 38, which is mounted on the vehicle body frame 12, is inclined rearwardly along the seat pipe 18, such that gravity imposed on the battery 38 is directed downward in an obliquely rearward direction. Therefore, the gravity that acts on the battery 38 is not applied to the electric power line 116, thereby preventing the electric power line 116 from becoming damaged due to gravity imposed on the battery 38. If the electric power line 116 were placed in a rear portion of the case 114 of the battery 38, then the case 114 would be required to have a space or a structure to provide room to protect the electric power line 116 from becoming damage due to gravity. However, since the electric power line 116 is disposed in a front portion of the case 114, the case 114 can have a smaller room than if the electric power line 116 were placed in a rear portion of the case 114, thus easily allowing the battery 38 to have a desired capacity. The electric power line 116 is connected to connectors 118, which are disposed on a lower portion of the battery 38.

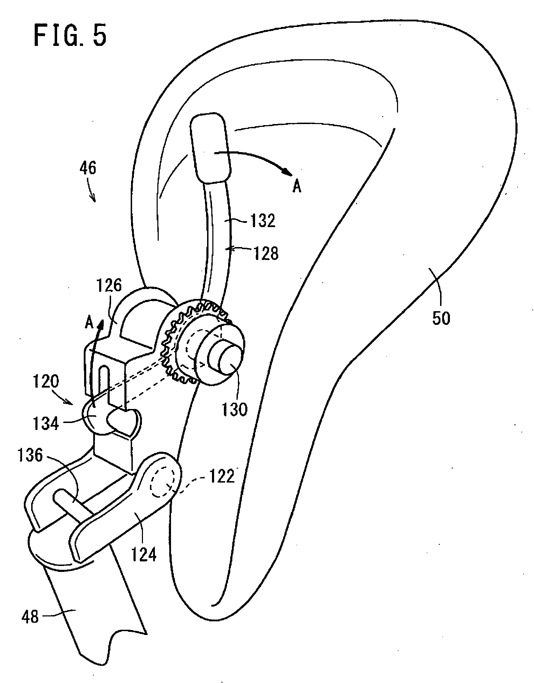

FIG. 5 is a detailed view showing the seat assembly 46. The seat assembly 46 includes the seat post 48, the seat 50, and a seat support 120 by which the seat 50 is angularly movably mounted on the seat post 48. The seat support 120 is foldable about a shaft 122. More specifically, the seat support 120 has a first fastened member 124, which is fastened to the seat post 48, and a second fastened member 126, which is fastened to the seat 50. The first fastened member 124 and the second fastened member 126 are angularly movable about the shaft 122. A coupling member 128 is angularly movably mounted on the second fastened member 126, for thereby coupling the second fastened member 126 to the first fastened member 124 when the first fastened member 124 and the second fastened member 126 are superposed on one another (i.e., when the seat support 120 is folded). The coupling member 128 has a seat lever 132 and a hook 134. When the hook 134 is hooked over an engaging bar 136, which is joined to the first fastened member 124, the hook 134 and the engaging bar 136 are placed in engagement with each other, thus making it possible for the second fastened member 126 to be coupled with the first fastened member 124 in a superposed relation. When the seat support 120 is folded, as shown in FIG. 1, the rider can be seated on the seat 50. When the rider moves the seat lever 132 in the direction indicated by the arrow A with the seat 50 being in the state shown in FIG. 1, the hook 134 also moves in the direction indicated by the arrow A. At this time, the hook 134 becomes disengaged from the engaging bar 136, thereby allowing the seat 50 to tip forwardly about the shaft 122. While the seat 50 is in the state shown in FIG. 1, even if the battery 38 is pulled in the direction indicated by the arrow B in an attempt to remove the battery 38 from the vehicle body frame 12, the battery 38 interferes with the seat 50 and cannot be removed. However, when the seat lever 132 is moved in the direction indicated by the arrow A to tip the seat 50 forwardly about the shaft 122, the battery 38 and the seat 50 are brought out of interference with each other, and the battery 38 can be removed.

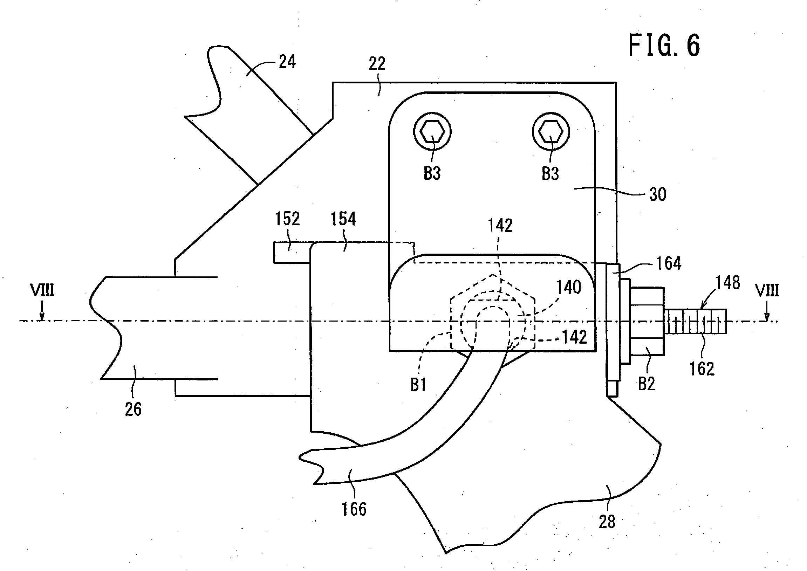

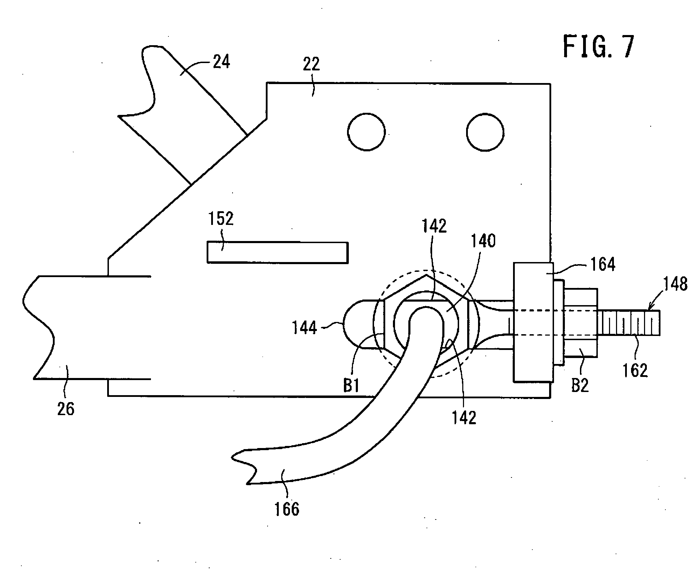

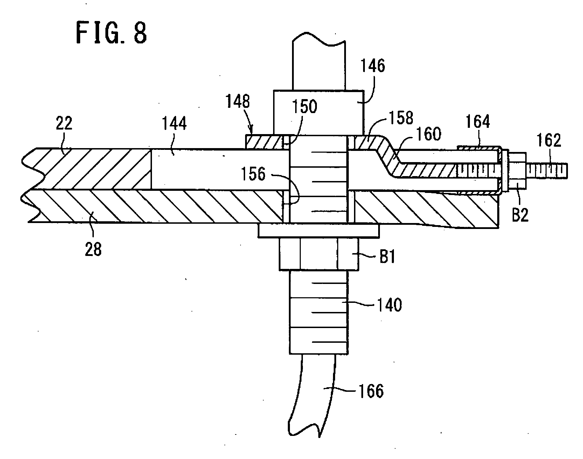

FIG. 6 is an enlarged view of an area C shown in FIG. 1. FIG. 7 is a view of the area C, which is shown at an enlarged scale in FIG. 6, with the protective cover 30 and the stand 28 removed. FIG. 8 is a cross-sectional view taken along line VIII-VIII of FIG. 6. In FIG. 8, the protective cover 30 is omitted from illustration.

The rear wheel support 22 secures a motor shaft 140 of the traction motor 34, which serves as an axle for the rear wheel WR, to the vehicle body frame 12. The end of the motor shaft 140 includes a pair of parallel mating surfaces 142. The rear wheel support 22 has an engaging slot 144 (see FIG. 7) defined therein, which opens rearwardly and engages the mating surfaces 142, for thereby locking the motor shaft 140 against rotation. The width of the engaging slot 144 is substantially the same as the distance between the mating surfaces 142. The engaging slot 144 permits the rear wheel support 22 to bear rotational reactive forces of the motor shaft 140. Consequently, a nut B1 is capable of maintaining fastening forces for fastening the end of the motor shaft 140.

As shown in FIG. 8, the motor shaft 140 has a flange 146. When the end of the motor shaft 140 is inserted into an opening 150 defined in a stopper holder 148, the stopper holder 148 is disposed in abutment against the flange 146. When the motor shaft 140 is inserted into the engaging slot 144, which is provided in the rear wheel support 22, the rear wheel support 22 is disposed in abutment against the stopper holder 148. The rear wheel support 22 has an engaging hole 152 defined therein. After an engaging finger 154 of the stand 28, which projects in the direction of the engaging hole 152, has been placed in engagement with the engaging hole 152 (see FIG. 6), the motor shaft 140 is inserted into an opening 156 defined in the stand 28. After the stopper holder 148, the rear wheel support 22, and the stand 28 have successively been placed on the motor shaft 140 outwardly from the flange 146, the nut B1 is tightened on the motor shaft 140, thereby securing the traction motor 34 to the vehicle body frame 12. Since the nut B1 is tightened with the engaging finger 154 of the stand 28 being kept in engagement with the engaging hole 152 in the rear wheel support 22, the stand 28 is fixed in a predetermined posture. Therefore, even if the nut B1 is loosened, the posture of the stand 28 is prevented from being changed.

The stopper holder 148 includes a fastened region 158, which includes the opening 150 and is fastened to the nut B1, a bent region 160, which bends from the fastened region 158 into the engaging slot 144 in the rear wheel support 22, and an extension 162 having an externally threaded rear end portion. The extension 162 extends in the rearward direction of the vehicle body from the bent region 160, and through the engaging slot 144 in the rear wheel support 22. The rear end portion of the extension 162 is inserted into a stopper 164, which is channel-shaped in cross-section and covers a rear end portion of the engaging slot 144 in the rear wheel support 22. Even if the nut B1 becomes loosened, movement of the motor shaft 140 is prevented by the stopper holder 148 and the stopper 164.

An electric power line 166 for supplying three-phase electric power to the traction motor 34 extends from the left end of the motor shaft 140. The left protective cover 30 is fastened to the rear wheel support 22 by nuts B3, so as to protect the left end of the motor shaft 140 and the electric power line 166 from external shocks. On the left-hand side of the electrically powered bicycle 10, the other stand 28, a stopper holder 148, a stopper 164, and the other protective cover 30 are mounted respectively on the left rear wheel support 22. The protective covers 30 may function as steps for placement thereon of the feet of a fellow passenger.

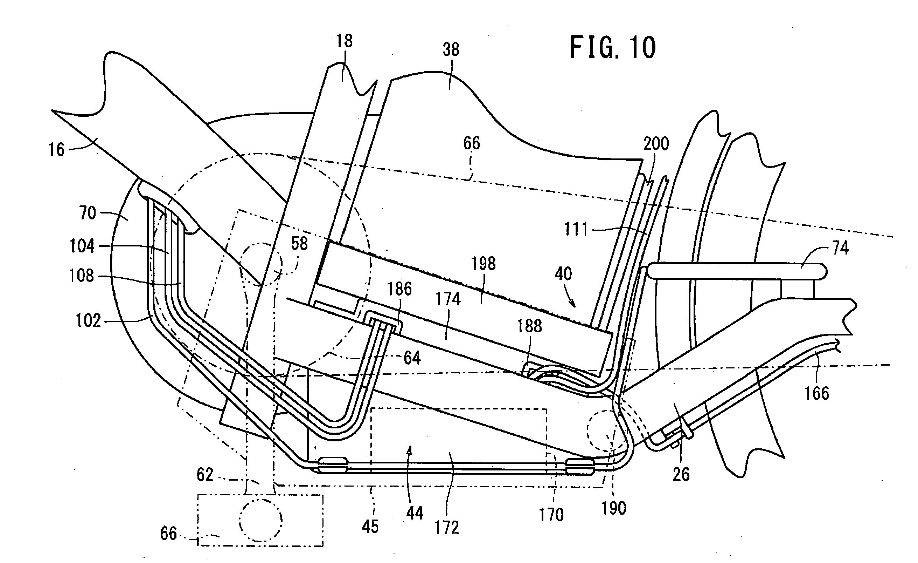

FIG. 9 is an exploded perspective view showing the drive control device housing 44 and the battery holder 40. FIG. 10 is an enlarged left-hand side elevational view of the drive control device housing 44 and the battery holder 40 shown in FIG. 1. In FIGS. 9 and 10, the housing cover 45 is omitted from illustration.

As shown in FIGS. 9 and 10, the drive control device housing 44 has a housing 172, which is disposed between the left and right second subframes 26 and projects downward from the left and right second subframes 26. The housing 172 accommodates therein the drive control device 170 that controls the traction motor 34, a lid 174 covering an upper end of the housing 172 and holding the battery holder 40 in a secured position above the housing 172, and a pair of front and rear third subframes 176 (see FIG. 9), which extend between the left and right second subframes 26 at front and rear positions on the left and right second subframes 26. The front and rear third subframes 176 secure the lid 174 at front and rear ends thereof. Respective pairs of holes 178 are provided in the front and rear third subframes 176 for passage of bolts that fasten the front and rear third subframes 176 and the lid 174 to each other. Pairs of holes 180 also are defined in front and rear ends of the lid 174 for alignment with the respective pairs of holes 178. When the front and rear third subframes 176 and the lid 174 are fastened.to each other by bolts, the lid 174 covers the upper end of the housing 172. Further, collars 181 are placed on the rear end of the lid 174 in alignment with the holes 180.

The lid 174 includes recesses 182, 184 defined respectively in front and rear portions of a left side thereof, and grommets 186, 188, which are disposed in the respective recesses 182, 184. The wire 102 and the cables 104, 108, which extend out of the grommet 110 on the main frame 16, are led into the housing cover 45, where the cables 104, 108 enter into the housing 172 through the grommet 186 and are connected to the drive control device 170 (see FIG. 10). Since the cables 104, 108 pass above the housing 172 and into the drive control device housing 44, the cables 104, 108 can easily be connected to the drive control device 170.

The wire 102 that leads into the housing cover 45 extends along a lower left-hand side surface of the drive control device 170, and then leaves the housing cover 45 and is connected to the rear wheel cantilever brake 74. Consequently, the wire 102 is protected by the housing cover 45. The electric power line 166, which extends from the left end of the motor shaft 140, extends forwardly along the left second subframe 26, and further extends above a cross pipe 190 between the left and right second subframes 26 and into the housing cover 45. In the housing cover 45, the electric power line 166 extends through the grommet 188 and into the housing 172, where the electric power line 166 is connected to the drive control device 170. The electric wire 111, which is connected to the battery lock device 42, is led into the housing cover 45, and thereafter, the electric wire 111 extends through the grommet 188 and into the housing 172, where the electric wire 111 is connected to the drive control device 170.

An electric power line 192, which is connected to the drive control device 170, has connection terminals 194 extending through a grommet 196 that is fastened to the lid 174 by screws. When the connection terminals 194 of the electric power line 192 are inserted upwardly into the grommet 196, the connection terminals 194 project upwardly from an upper surface of the lid 174. Since the lid 174 is secured in place as a result of being surrounded by the second subframes 26 and the third subframes 176, the lid 174 is sufficiently rigid to support the battery 38 and the battery holder 40, which are placed on the lid 174. Therefore, the lid 174 with the connection terminals 194 mounted thereon functions as a terminal base, which supports the connection terminals 194 at the time that the battery 38 is installed and removed. Thus, there is no need to provide a separate terminal base.

The battery holder 40 has a box 198 that opens upwardly for holding the battery 38, and a guide rail 200 for holding and guiding the battery 38. The box 198 of the battery holder 40 is fastened to the upper surface of the lid 174 by non-illustrated bolts. The box 198 has four holes 202 defined in a bottom portion thereof, and the lid 174 has four holes 204 defined therein, which are placed in alignment with the holes 202. The battery holder 40 is placed on the lid 174 with the holes 202 and the holes 204 being placed in alignment with each other, and the battery holder 40 is fastened to the upper surface of the lid 174 by bolts that extend through the holes 202, 204. The bottom of the box 198 of the battery holder 40 has an opening 206 defined therein, which keeps the bottom of the box 198 out of interference with the connection terminals 194 of the electric power line 192 when the battery holder 40 is fastened to the upper surface of the lid 174.

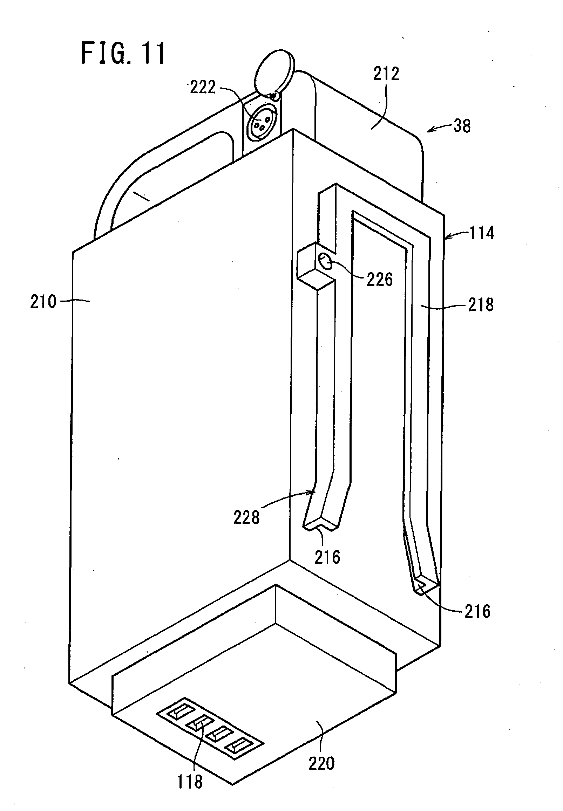

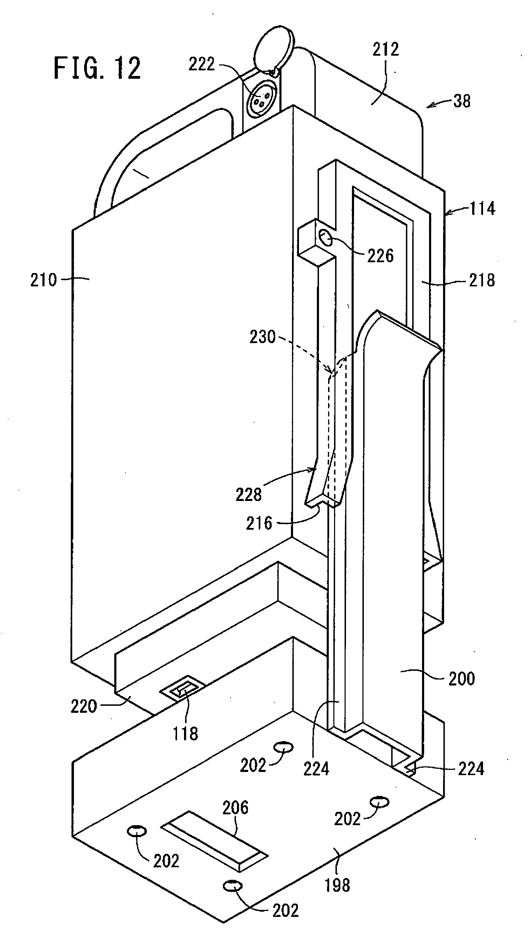

As shown in FIG. 11, the case 114 of the battery 38 has a battery casing 210 for housing three battery modules 112 therein, a grip 212 mounted on an upper end of the battery casing 210, a guide 218 mounted on a rear surface of the battery casing 210 and having grooves 216, and a fitting land 220 mounted on a lower end of the battery casing 210 for being fitted in engagement in the box 198 of the battery holder 40. The grip 212 has a connector 222 for connection with the connector of a non-illustrated battery charger. The guide 218 fits over the guide rail 200 of the battery holder 40. As shown in FIG. 12, when the guide 218 is fitted over the guide rail 200, the battery 38 slides along the guide rail 200 of the battery holder 40. More specifically, the guide rail 200 has flanges 224 that fit respectively in the grooves 216 of the guide 218, thereby allowing the battery 38 to slide along the guide rail 200. When the battery 38 slides downwardly, the fitting land 220 of the battery 38 fits into the box 198 of the battery holder 40, which holds the battery 38. The guide 218 has a hole 226 defined therein, which opens laterally for receiving a lock pin 262 (see FIGS. 16 through 18) of the battery lock device 42 upon insertion of the lock pin 262 into the hole 226.

The guide 218 has a lower end, which is shaped in the form of a tapered portion 228 that spreads progressively outward. More specifically, the tapered portion 228 has a tapered shape, such that the distance between the grooves 216 progressively increases. The guide rail 200 has an upper end, which also is shaped in the form of a tapered portion 230 that spreads progressively outward. More specifically, the flanges 224 of the tapered portion 230 have slanted surfaces, which make up the tapered portion 230 having a tapered shape, such that the distance between outer ends of the flanges 224 progressively increases. The tapered portions 228, 230 allow the guide 218 to be fitted easily into the guide rail 200, thereby facilitating installation of the battery 38 in the battery holder 40. The fitting land 220 of the battery 38 has, on a bottom surface thereof, connectors 118 for receiving the connection terminals 194 of the electric power line 192 when the connecting terminals 194 are inserted in the connectors 118. The tapered portions 228, 230 may be provided on either one of the guide 218 and the guide rail 200. In either case, the tapered portions 228, 230 allow the guide 218 to be fitted easily into the guide rail 200.

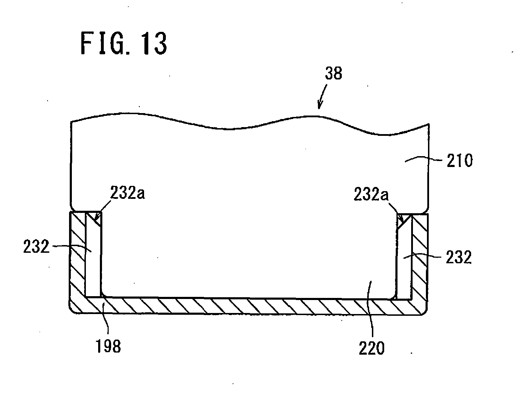

The box 198 of the battery holder 40 includes a plurality of vertical ribs 232 on longitudinal side surfaces thereof for gripping the battery 38 in order to hold the battery 38 firmly in place (see FIG. 9). As shown in FIG. 13, the ribs 232 have slanted surfaces 232a, which become progressively thicker toward the battery 38 in a downward direction. The slanted surfaces 232a allow the fitting land 220 to be fitted easily into the box 198, and also are effective to hold the battery 38 firmly in place.

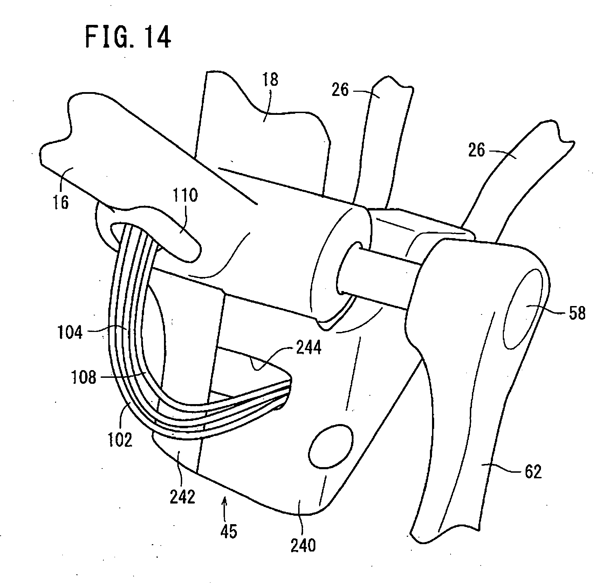

FIG. 14 is a perspective view showing front and left-hand sides of the housing cover 45 illustrated in FIG. 1. The housing cover 45 has a left cover 240 and a right cover 242, which are attached to respective left and right portions of the drive control device housing 44, so as to protect the drive control device housing 44. The left cover 240 has a recess 244 defined in a front portion thereof. The wire 102 and the cables 104, 108, which extend outside of the grommet 110 on the lower surface of the rear end portion of the main frame 16, are led through the recess 244 into the housing cover 45.

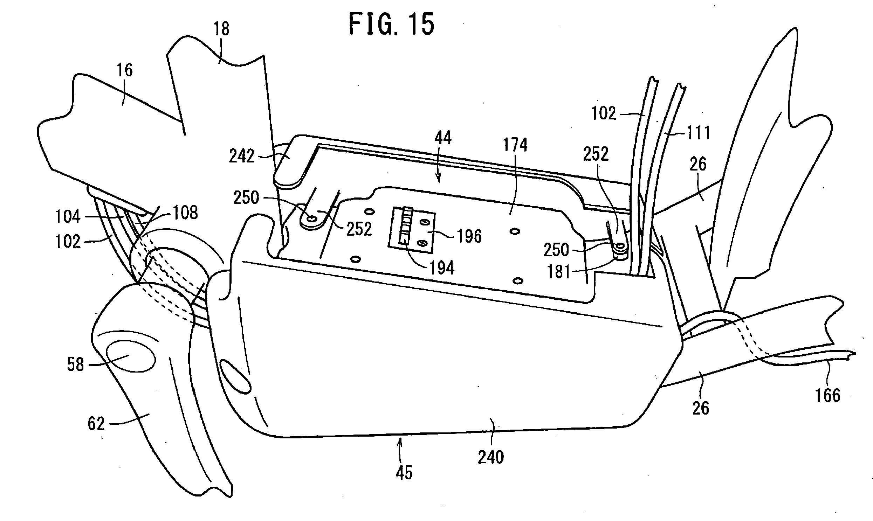

FIG. 15 is a perspective view showing upper and left-hand sides of the drive control device housing 44 combined' with the housing cover 45 shown in FIG. 1. Respective pairs of fastened arms 252, which have respective holes 250, are provided on front and rear portions of the left cover 240 and the right cover 242. The housing cover 45 is fastened to the vehicle body frame 12 by non-illustrated bolts, which are threaded through the holes 250 in the fastened arms 252, the holes 180 in the lid 174, and the holes 178 in the third subframes 176. The collars 181 are disposed between the holes 180 in the rear end of the lid 174 and the holes 250 in the fastened arms 252 on rear portions of the left cover 240 and the right cover 242. Since the rear third subframe 176 is disposed at a lower position than the front third subframe 176, the collars 181 are provided beneath the holes 250 in the fastened arms 252 on the rear portions of the left cover 240 and the right cover 242, in order to keep the fastened arms 252 at substantially the same height on the front and rear portions of the left cover 240 and the right cover 242.

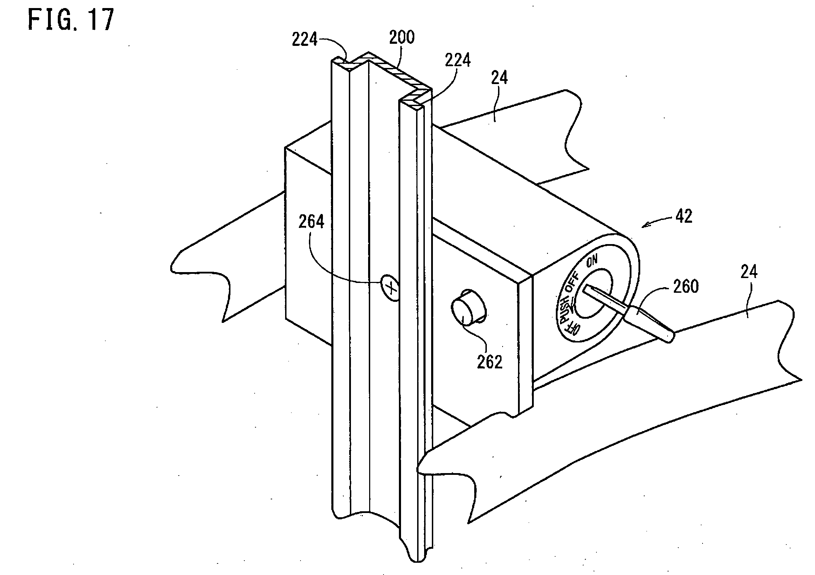

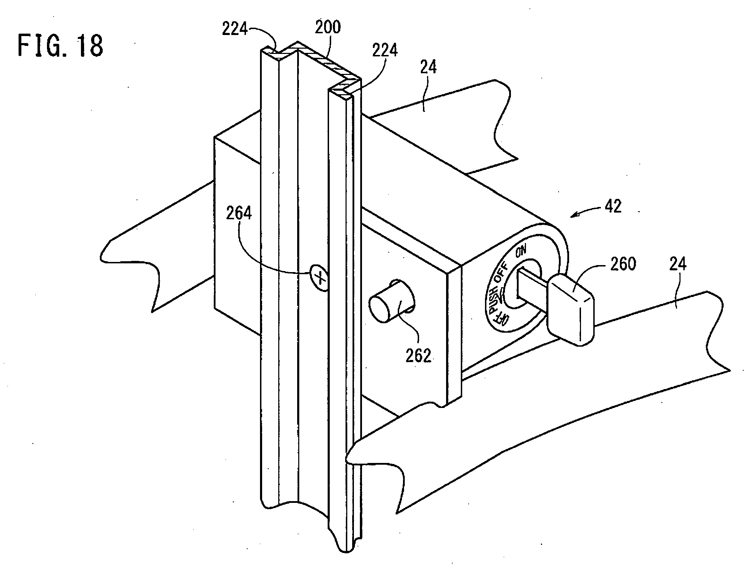

FIGS. 16 through 18 are views illustrating the manner in which the lock pin 262 of the battery lock device 42 is operated by the key 260. FIG. 16 shows the lock pin 262 in a first state, FIG. 17 shows the lock pin 262 in a second state, and FIG. 18 shows the lock pin 262 in a third state. The guide rail 200 of the battery holder 40 is fastened to the battery lock device 42 by a screw 264.

When the lock pin 262 is placed in the first state, the key 260 can be removed from a keyhole of the battery lock device 42, thereby disconnecting the power supply of the electrically powered bicycle 10. Further, when the lock pin 262 is placed in the first state, the lock pin 262 does not project from the battery lock device 42 (see FIG. 16). Accordingly, the battery 38 can be removed from the vehicle body frame 12 when the lock pin 262 is placed in the first state. While the lock pin 262 is in the first state, if the key 260 is turned one notch to the right, the lock pin 262 is moved into the second state, at which the lock pin 262 projects one step from the battery lock device 42 (see FIG. 17). In this condition, when the lock pin 262 is placed in the second state, the lock pin 262 is inserted into the hole 226 of the battery 38 (see FIGS. 11 and 12), thereby locking the battery 38 and preventing removal of the battery 38 from the vehicle body frame 12. Further, when the lock pin 262 is in the second state, the power supply of the electrically powered bicycle 10 remains turned off, and the key 260 can be removed from the keyhole of the battery lock device 42. In this condition, if the key 260 is further turned one notch to the right while the lock pin 262 is in the second state, the lock pin 262 is moved into the third state, and the lock pin 262 projects two steps from the battery lock device 42 (see FIG. 18). When the lock pin 262 is placed in the third state, the lock pin 262 is inserted further into the hole 226 of the battery 38, thereby locking the battery 38 and preventing removal of the battery 38 from the vehicle body frame 12. Moreover, when the lock pin 262 is in the third state, the power supply of the electrically powered bicycle 10 is turned on, and the key 260 cannot be removed from the keyhole of the battery lock device 42.

Operations of the electrically powered bicycle 10 during times that the rider rides the electrically powered bicycle 10 will be described below. While the lock pin 262 is in the first state, the rider moves the seat lever 132 in the direction indicated by the arrow A in order to tip the seat 50 forwardly. The rider installs the battery 38 in the battery holder 40, and the rider returns the forwardly tipped seat 50 back to the original position shown in FIG. 1. Thereafter, the rider turns the key 260, which is inserted in the keyhole of the battery lock device 42, one notch to the right, thereby bringing the lock pin 262 into the second state so as to lock the battery 38 in place. The rider turns the key 260 further one notch to the right, thereby bringing the lock pin 262 into the third state and supplying power to the electrically powered bicycle 10. At this time, riding of the electrically powered bicycle 10 can commence. The rider, who is seated on the seat 50, turns the accelerator grip 80 in order to energize the traction motor 34, thereby propelling the electrically powered bicycle 10. At this time, when the rider operates the pedals 60, the load on the traction motor 34 is reduced. Consequently, the battery 38 lasts longer, so that the electrically powered bicycle 10 can travel over an increased distance for an increased period of time.

When the rider operates either one of the right brake lever 78 and the left brake lever 78, the drive control device 170 stops supplying electric power to the traction motor 34. The traction motor 34 rotates by inertia when electric power stops being supplied to the traction motor. Therefore, when the front wheel cantilever brake 72 and/or the rear wheel cantilever brake 74 is actuated by the brake levers 78, the traction motor 34 does not apply a propulsive force to the electrically powered bicycle 10, and thus, the electrically powered bicycle 10 can be decelerated efficiently. The drive control device 170 judges whether or not the brake levers 78 have been operated based on detected signals from the brake sensors 83, 92.

When the rider finishes driving the electrically powered bicycle 10, the rider places the electrically powered bicycle 10 on the stands 28, thereby enabling the electrically powered bicycle 10 to stand on its own, and turns the key 260 to the left, thereby disconnecting the power supply of the electrically powered bicycle 10. At this time, the rider may turn the key 260 one notch to the left to bring the lock pin 262 into the second state and pull out the key 260, or alternatively, the rider may turn the key 260 two notches to the left to bring the lock pin 262 into the first state and pull out the key 260. When the lock pin 262 is in the first state, the battery 38 is in an unlocked condition. Therefore, in this state, it is preferable for the battery 38 to be removed from the electrically powered bicycle 10 to prevent theft of the electrically powered bicycle 10.

While a preferred embodiment of the present invention has been described above, the technical scope of the present invention is not limited to the description of the embodiment. It will be obvious to those skilled in the art that various changes and modifications may be made to the above embodiment. It is clear from the scope of the patent claims that such changes and modifications fall within the technical scope of the present invention. The parenthetical reference characters, which are included in the patent claims, correspond with the reference characters in the accompanying drawings for facilitating understanding of the present invention. However, the present invention should not be construed as being limited to the illustrated components to which such reference characters refer.

## Claims

1. An electrically powered bicycle (10) comprising an electric component layout structure, including:
a battery (38) for supplying electric power to a traction motor (34) to propel the electrically powered bicycle;
a vehicle body frame (12) housing the battery (38) between a seat pipe (18) and a rear wheel (WR) and having a pair of left and right first subframes (24) including respective front ends connected to an upper portion of the seat pipe (18), and respective rear ends connected to rear wheel supports (22) that rotatably support the rear wheel (WR), and a pair of left and right second subframes (26) including respective front ends connected to a lower portion of the seat pipe (18), and respective rear ends connected to the rear wheel supports (22);
a battery holder (40) fixing the battery (38) to the vehicle body frame (12); and
a drive control device (170) for supplying electric power to the traction motor (34) in response to a request from a rider of the electrically powered bicycle;
**characterized by**
a drive control device housing (44), including a housing (172) disposed between the left and right second subframes (26) and projecting downward from the left and right second subframes (26), the housing (172) accommodating the drive control device (170) therein, and a lid (174) covering an upper end of the housing (172) and holding the battery holder (40), which is secured thereto, above the housing (172).

2. The electrically powered bicycle (10) according to claim 1, wherein
the drive control device housing (44) further includes a pair of front and rear third subframes (176), which extend between the left and right second subframes (26) at front and rear positions on the left and right second subframes (26), and securing the lid (174) at front and rear ends thereof.

3. The electrically powered bicycle (10) according to claim 1, wherein
the battery (38) includes a plurality of battery modules (112) housed in a case (114), the battery (38) being inclined rearwardly along the seat pipe (18), the battery modules (112) being interconnected by an electric power line (116), which is positioned in a front portion of the case (114) of the battery (38).

4. The electrically powered bicycle (10) according to claim 1, wherein
the battery (38) has on a rear surface thereof a guide (218) for fitting engagement with a guide rail (200) of the battery holder (40), the guide (218) having a lower end shaped with a tapered portion that spreads progressively outward.

5. The electrically powered bicycle (10) according to claim 1, wherein
the lid (174) includes connection terminals (194) of an electric power line (192), the connection terminals (194) being connectable to connectors (118) of the battery (38).

## Patentansprüche

1. Elektrisch angetriebenes Fahrrad (10), das eine Anordnungsstruktur für elektrische Komponenten aufweist, aufweisend:
eine Batterie (38) zum Zuführen von elektrischer Leistung an einen Fahrmotor (34) um das elektrische angetriebene Fahrzeug anzutreiben;
einen Fahrzeugkarosserierahmen (12), der die Batterie (38) zwischen einem Sitzrohr (18) und einem Hinterrad (WR) aufnimmt und der ein Paar von linken und rechten Unterrahmen (24) hat, die jeweils vordere Enden umfassen, die mit einem oberen Bereich des Sitzrohrs (18) verbunden sind und entsprechende hintere Enden, die mit den Hinterradträgern (22), die das Hinterrad (WR) drehbar lagern, verbunden sind und ein Paar von linken und rechten zweiten Unterrahmen (26), die jeweils vordere Enden umfassen, die mit einem unteren Bereich des Sitzrohrs (18) verbunden sind, und entsprechende hintere Enden, die mit der Hinterradstütze (22) verbunden sind;
einen Batteriehalter (40), der die Batterie (38) an dem Fahrzeugkarosserierahmen (12) fixiert; und
eine Fahrsteuerungsvorrichtung (170) zum Zuführen elektrischer Leistung zu dem Fahrmotor (34) als Reaktion auf eine Anfrage von einem Fahrer des elektrisch angetriebenen Fahrzeugs;
**gekennzeichnet durch**
ein Fahrsteuerungsvorrichtungsgehäuse (44), das ein Gehäuse (172) umfasst, das zwischen dem linken und rechten zweiten Unterrahmen (26) angeordnet ist und nach unten aus dem unteren linken und rechten zweiten Unterrahmen (26) hervorsteht, wobei das Gehäuse (172) die Fahrsteuerungsvorrichtung (170) darin aufnimmt, und einen Deckel (174), der ein oberes Ende des Gehäuses (172) abdeckt und den Batteriehalter (40) der daran gesichert ist über dem Gehäuse (172) hält.

2. Elektrisch angetriebenes Fahrrad (10) gemäß Anspruch 1, wobei
das Fahrsteuerungsvorrichtungsgehäuse (44) außerdem ein Paar von vorderen und hinteren dritten Unterrahmen (176) umfasst, die sich zwischen dem linken und rechten zweiten Unterrahmen (26) an einer vorderen und hinteren Position auf dem linken und rechten zweiten Unterrahmen (26) erstrecken und den Deckel (174) an ihren vorderen und hinteren Enden sichern.

3. Elektrisch angetriebenes Fahrrad (10) gemäß Anspruch 1, wobei
die Batterie (38) eine Mehrzahl von Batteriemodulen (112) umfasst, die in einem Gehäuse (114) aufgenommen sind, wobei die Batterie (38) nach hinten entlang des Sitzrohrs (18) geneigt ist, und die Batteriemodule (112) miteinander durch eine elektrische Leitung (116) verbunden sind, die in einem vorderen Bereich des Gehäuses (114) der Batterie (38) angeordnet ist.

4. Elektrisch angetriebenes Fahrrad (10) gemäß Anspruch 1, wobei
die Batterie an ihrer hinteren Fläche eine Führung (218) zum passenden Eingriff mit einer Führungsschiene (200) des Batteriehalters (40) hat, wobei die Führung (218) ein unteres Ende, das mit einem sich verjüngenden Bereich geformt ist, der sich zunehmend nach außen aufweitet.

5. Elektrisch angetriebenes Fahrrad (10) gemäß Anspruch 1, wobei
der Deckel (174) Verbindungsanschlüsse (194) einer elektrischen Leitung (132) umfasst, wo die Verbindungsanschlüsse (194) mit Verbindern (118) der Batterie (38) verbindbar sind.

## Revendications

1. Bicyclette électrique (10) comprenant une structure d'organisation de composants électriques, comportant :
une batterie (38) pour fournir de l'énergie électrique à un moteur de traction (34) afin de propulser la bicyclette électrique ;
un cadre de corps de véhicule (12) accueillant la batterie (38) entre un tube de selle (18) et une roue arrière (WR) et possédant une paire de premiers faux cadres gauche et droit (24) comprenant des extrémités avant respectives reliées à une partie supérieure du tube de selle (18) et des extrémités arrière respectives reliées à des supports de roue arrière (22) qui supportent en rotation la roue arrière (WR), et une paire de deuxièmes faux cadres gauche et droit (26) comprenant des extrémités avant respectives reliées à une partie inférieure du tube de siège (18), et des extrémités arrière respectives reliées aux supports de roue arrière (22) ;
un élément de retenue de batterie (40) fixant la batterie (38) au cadre de corps de véhicule (12) ; et
un dispositif de commande d'excitation (170) pour fournir de l'énergie électrique au moteur de traction (34) en réponse à une requête d'un cycliste de la bicyclette électrique ;
**caractérisé par**
un boîtier de dispositif de commande d'excitation (44), comprenant un boîtier (172) disposé entre les deuxièmes faux cadres gauche et droit (26) et faisant saillie vers le bas à partir des deuxièmes faux cadres gauche et droit (26), le boîtier (172) accueillant le dispositif de commande d'excitation (170) dans celui-ci, et un couvercle (174) recouvrant une extrémité supérieure du boîtier (172) et retenant l'élément de retenue de batterie (40), qui est fixé à celui-ci, au-dessus du boîtier (172).

2. Bicyclette électrique (10) selon une revendication 1, dans laquelle le boîtier de dispositif de commande d'excitation (44) comprend en outre une paire de troisièmes faux cadres avant et arrière (176), qui s'étendent entre les deuxièmes faux cadres gauche et droit (26) au niveau de positions avant et arrière sur les deuxièmes faux cadres gauche et droit (26), et fixant le couvercle (174) au niveau d'extrémités avant et arrière et ceux-ci.

3. Bicyclette électrique (10) selon une revendication 1, dans laquelle la batterie (38) comprend une pluralité de modules de batterie (112) accueillis dans un boîtier (114), la batterie (38) étant inclinée vers l'arrière le long du tube de selle (18), les modules de batterie (112) étant interconnectés par une ligne d'alimentation électrique (116), qui est positionnée dans une partie avant du boîtier (114) de la batterie (38).

4. Bicyclette électrique (10) selon une revendication 1, dans laquelle la batterie (38) possède sur une surface arrière de celle-ci un guide (218) pour une mise en prise ajustée avec un rail de guidage (200) de l'élément de retenue de batterie (40), le guide (218) possédant une extrémité inférieure formée avec une partie conique qui s'évase progressivement vers l'extérieur.

5. Bicyclette électrique (10) selon une revendication 1, dans laquelle le couvercle (174) comprend des bornes de connexion (194) d'une ligne d'alimentation électrique (192), les bornes de connexion (194) étant connectables à des connecteurs (118) de la batterie (38).
